# EUROPÄISCHE PATENTSCHRIFT

(11) **EP 3 828 236 B1**
(45) Veröffentlichungstag und Bekanntmachung des Hinweises auf die Patenterteilung: **01.06.2022**
(21) Anmeldenummer: 19211919.6
(22) Anmeldetag: 27.11.2019
(51) Int. Cl.: C08L 69/00

(54) **FLAMMGESCHÜTZTER POLYCARBONAT-POLYESTER BLEND**
FLAMEPROOF POLYCARBONATE POLYESTER BLEND
MÉLANGE IGNIFUGE DE POLYESTER ET DE POLYCARBONATE

(43) Veröffentlichungstag der Anmeldung: 02.06.2021
(73) Patentinhaber: Covestro Intellectual Property GmbH & Co. KG, 51373 Leverkusen (DE)
(72) Erfinder: HUFEN, Ralf, 47239 Duisburg (DE); NOLTE, Marius, 51065 Köln (DE)
(74) Vertreter: Levpat

(56) Entgegenhaltungen:
- EP-A1- 2 377 899
- US-A1- 2015 307 707

## Beschreibung

Die vorliegende Erfindung betrifft eine thermoplastische Formmasse enthaltend Polycarbonat und/oder Polyestercarbonat, Polyester, Schlagzähmodifikator und Flammschutzmittel, ein Verfahren zur Herstellung der Formmasse und die Verwendung der Formmasse zur Herstellung von Formkörpern sowie die hergestellten Formkörper.

Thermoplastische Polycarbonat- oder Polyestercarbonatformmassen und ihre Zusammensetzungen sind seit vielen Jahren bekannt und in zahlreichen Dokumenten beschrieben. In Rahmen der vorliegenden Erfindung wird verkürzt die Bezeichnung Polycarbonatformmasse verwendet, damit sind aber auch Polyestercarbonatformmassen und Formmassen enthaltend Mischungen aus Polycarbonat und Polyestercarbonat gemeint.

In Polymerblends wird das Polycarbonat mit mindestens einem weiteren Thermoplasten gemischt und zu einer Formmasse verarbeitet. Über die Wahl der Blendpartner und weiterer Komponenten wie beispielsweise Additiven kann das Eigenschaftsprofil der Formmasse und der Formkörper hinsichtlich rheologischer, mechanischer und thermischer Charakteristika in weiten Teilen variiert und an die Anforderungen der jeweiligen Anwendung angepasst werden. So werden aus den Formmassen Formkörper für den Automobilbereich, den Bausektor und den Elektronikbereich hergestellt.

Zur Erhöhung der Zähigkeit, insbesondere bei tiefen Temperaturen, werden dem Polycarbonat Blendpartner mit kautschukelastischen Eigenschaften als Schlagzähmodifikatoren zugesetzt. Als Kautschukgrundlage kommen beispielsweise Butadienkautschuke, Acrylatkautschuke und Silikonkautschuke zum Einsatz.

Auch Mischungen unterschiedlicher Kautschuktypen werden beschrieben. So offenbart US 2013/ 131257 A1 ein Polycarbonat Blend enthaltend Polycarbonat, Polyester und ein Pfropfpolymer mit einem Kern aus einem Silikon-Acrylat Kompositkautschuk und einer Hülle aus Alkyl(meth)acrylat und Glycidylmethacrylat. Die Formmasse zeichnet sich durch verbesserte Chemikalienbeständigkeit, Zähigkeit sowie thermische und physikalische Eigenschaften aus.

Bei Polycarbonatformmassen besteht oft neben der durch den Schlagzähmodifikator verbesserten Zähigkeit auch die Notwendigkeit einer gewissen Flammwidrigkeit, insbesondere im Bereich von Elektronikanwendungen. Dazu werden Flammschutzmittel als weitere Komponente verwendet, häufig auf Basis von Phosphorverbindungen. Dabei haben sich Phosphazene als vorteilhaft erwiesen, da sie einen geringeren negativen Einfluss auf die Wärmeformbeständigkeit aufweisen als beispielsweise Phosphate.

US 2008/0214731 offenbart eine thermoplastische Formmasse, die sich durch ihre Flammwidrigkeit auszeichnet. Die Zusammensetzung enthält aromatisches Poly(ester) carbonat mit einem gewichtsmittleren Molekulargewicht von mindestens 25.000 g/mol, Polyester kautschukmodifiziertes Pfropfpolymerisat auf Basis eines Silikon-Acrylat Kompositkautschuks und einem besonderen Verhältnis von Polyorganosiloxan / Poly(meth) alkylacrylat / gepfropfte Schale, ein phosphorhaltige Verbindung, fluoriertes Polyolefin und eine Borverbindung mit einem mittleren Teilchendurchmesser von 2 bis 10 µm.

WO 00/00542 offenbart Pfropfcopolymerisate aus Masse-, Lösungs- oder Masse-Suspensionspolymerisation als Komponenten von thermoplastischen Formmassen auf Basis von Polycarbonat oder Polyestercarbonat, die auch eine Phosphazenverbindung sowie gegebenenfalls fluoriertes Polyolefin und thermoplastisches Polymer enthalten. Die thermoplastische Formmassen enthalten aromatisches Polycarbonat und / oder Polyestercarbonat, Pfropfcopolymer Vinylmonomer auf einer Pfropfgrundlage mit einer Glasübergangstemperatur unter 10°C, erhalten durch Masse-, Lösungs- oder Masse-Suspensionspolymerisation, Vinyl (co) polymeren und/oder Polyalkylenterephthalaten, (D) Phosphazen und fluoriertes Polyolefin.

WO 00/00030 offenbart mit Phosphazenen ausgerüstete Formmassen auf der Basis von Polycarbonat und Pfropfpolymerisaten mit einer Pfropfgrundlage ausgewählt aus der Gruppe der Siliconkautschuke, EP(D)M-Kautschuke und Acrylatkautschuke, die einen hervorragenden Flammschutz und sehr gute mechanische Eigenschaften wie Spannungsrissbeständigkeit oder Kerbschlagzähigkeit aufweisen.

WO 2014/ 086800 A1 offenbart flammwidrige, schlagzähmodifizierte Polycarbonatformmassen, die eine Eigenschaftskombination aus hervorragenden mechanischen Eigenschaften, sehr guter Flammwidrigkeit, hoher Hydrolysestabilität und hoher chemischer Beständigkeit aufweisen, enthaltend aromatisches Polycarbonat und / oder aromatisches Polyestercarbonat, kautschukmodifiziertes Pfropfpolymerisat auf Basis eines Silikon-Acrylat Kompositkautschuks, mindestens ein cyclisches Phosphazen, kautschukfreies Vinyl(co) polymer oder Polyalkylenterephthalat, Additive und Antitropfmittel.

Wird als Blendpartner für das Polycarbonat ein Polyester eingesetzt, erhält die Formmasse einen teilkristallinen Charakter, der hinsichtlich mancher Eigenschaften vorteilhaft sein kann. Allerdings kann das Erreichen einer guten Flammwidrigkeit weiter erschwert werden. Damit werden die Auswahl geeigneter Komponenten und mögliche Zusammensetzungsbereiche noch weiter eingeschränkt.

In US 2008/ 0090961 A1 wird eine thermoplastische Formmasse offenbart, die sich durch Flammwidrigkeit und Schlagzähigkeit auszeichnet. Die Zusammensetzung enthält aromatisches Poly(ester)carbonat, Polyalkylenterephthalat, ein kautschukmodifiziertes Pfropfpolymerisat auf Basis eines Silikon-Acrylat Kompositkautschuks, eine phosphorhaltige Verbindung und fluoriertes Polyolefin.

Die im Stand der Technik offenbarten Polycarbonat-Polyester Blends sind allerdings noch verbesserungswürdig hinsichtlich der Kombination von mechanischen Eigenschaften wie Schlagzähigkeit und Kerbschlagzähigkeit, Steifigkeit, Schmelzefließfähigkeit und Flammwidrigkeit.

Werden die Formkörper als Gehäusematerialien beispielsweise für medizinische Geräte verwendet, kommt als weitere Anforderung eine Beständigkeit gegenüber aggressiven Medien, die beispielsweise in Krankenhäusern als Reinigungsmittel eingesetzt werden, dazu. Solche Reinigungsmittel sind beispielsweise Lösungen basierend auf quartären Ammoniumverbindungen und tertiären Aminen und sind als Hexaquart^{™} plus (BBraun) kommerziell verfügbar.

Für die im Stand der Technik beschriebenen Polycarbonat Blends ist eine Beständigkeit gegen solche Medien nicht offenbart. Für den Fachmann ist aber klar, dass die Chemikalienbeständigkeit verschiedener Materialen bei Kontakt mit unterschiedlichen Medien kaum vorhersagbar ist. Aus einer guten Widerstandsfähigkeit gegenüber beispielsweise Fetten und Ölen kann nicht auf ein ebenso positives Verhalten gegenüber Alkoholen oder Ammonium- und Amin-Verbindungen geschlossen werden. Auch kann ein Material, dass einem anderen Material bei Kontakt mit einem ersten Medium überlegen ist, bei Wechsel des Mediums ein unerwartet schlechteres Verhalten zeigen.

Es war daher wünschenswert, eine thermoplastische Formmasse bereitzustellen, bei der sich die Formmasse und die daraus hergestellten Formkörper durch eine vorteilhafte Kombination von mechanischen Eigenschaften, insbesondere Schlagzähigkeit und Kerbschlagzähigkeit, sowie Steifigkeit, Schmelzefließfähigkeit und Flammwidrigkeit auszeichnet. Bevorzugt ist für die Herstellung dünner Bauteilgeometrien eine Steifigkeit von mindestens 2200 MPa (gemessen als Zug-E-Modul) wünschenswert. Besonders bevorzugt sollen die aus der Formmasse hergestellte Formkörper zudem eine gute Beständigkeit gegenüber Reinigungsmittel auf Basis von quartären Ammoniumverbindungen und tertiären Aminen aufweisen, wie sie häufig im medizinischen Bereich zur Anwendung kommen.

Überraschenderweise wurde gefunden, dass eine thermoplastische Formmasse enthaltend
A) 45 bis 65 Gew.-%, bevorzugt 50 bis 62 Gew.-% mindestens eines aromatisches Polycarbonats, Polyestercarbonats oder Mischungen daraus,
B) 18 bis 31 Gew.-% Gew.-%, bevorzugt 20 bis 30 Gew.-% mindestens eines Polybutylenterephthalats mit einer Fließfähigkeit von 5g/10 min bis 30g/10 min, bevorzugt 7g/10 min bis 20 g/10 min, jeweils bestimmt gemäß DIN EN ISO 1133 bei 250°C Messtemperatur und einer Belastung von 2.16 kg,
C) 3 bis 10 Gew.-%, bevorzugt 4 bis 9 Gew.-% mindestens eines kautschukmodifizierten Pfropfpolymerisats mit einer Pfropfgrundlage aus einem Silikon-Acrylat-Kompositkautschuk und einem Silikonkautschukgehalt von 20 bis 60 Gew.-%, bevorzugt 25 bis 50 Gew.-%, jeweils bezogen auf die Pfropfgrundlage
D) 8 bis 13 Gew.-%, bevorzugt 9 bis 12 Gew.-% mindestens eines Phosphazens,
E) 0 bis 8,0 Gew.-%, bevorzugt 0,2 bis 3 Gew.-% mindestens eines Polymeradditivs, wobei das Gewichtsverhältnis der Komponenten D) zu C) im Bereich von 1,3:1 bis 2,5:1, bevorzugt 2:1 bis 2,5:1 liegt,
die gewünschten Eigenschaften aufweist.

Bevorzugt besteht die Formmasse zu mindestens 90 Gew.-%, weiter bevorzugt zu mindestens 95 Gew.-% aus den Komponenten A bis E. Besonders bevorzugt besteht die Zusammensetzung nur aus den Komponenten A bis E.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934). Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 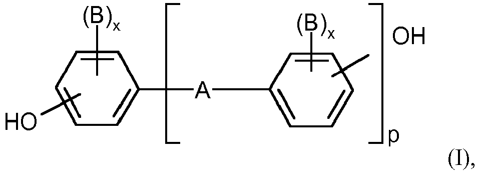 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 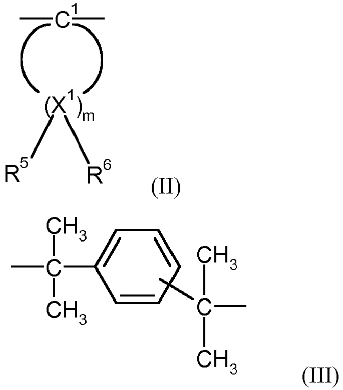
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel M_{w}, gemessen durch GPC (Gelpermeationschromatographie) mit Polycarbonatstandard auf Basis Bisphenol A) von bevorzugt 20000 bis 40000 g/mol, weiter bevorzugt 24000 bis 35000 g/mol, besonders bevorzugt 28000 bis 33000 g/mol. Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Bevorzugt wird als Komponente A lineares Polycarbonat auf Basis von Bisphenol A eingesetzt.

### Komponente B

Erfindungsgemäß wird als Komponente B ein Polybutylenterephthalat oder eine Mischung von Polybutylenterephthalaten eingesetzt. Eine übliche Bezeichnung ist PBT.

Es handelt sich hierbei in bevorzugter Ausführungsform um Reaktionsprodukte aus Terephthalsäure oder ihren reaktionsfähigen Derivaten, wie Dimethylestern oder Anhydriden und 1,4- Butandiol sowie Mischungen dieser Reaktionsprodukte.

Die Polybutylenterephthalate enthalten also Struktureinheiten abgeleitet von Terephthalsäure und 1,4- Butandiol.

Unter Polybutylenterephthalate im Sinne der vorliegenden Erfindung sind auch solche Polyester zu verstehen, die neben Terephthalsäureresten anteilig weitere aromatische, aliphatische oder cycloaliphatische Dicarbonsäuren mit bis zu 50 mol-%, vorzugsweise mit bis zu 25 mol-% enthalten. Dies können z.B. aromatische oder cycloaliphatische Dicarbonsäuren mit 8 bis 14 C-Atomen oder aliphatischer Dicarbonsäuren mit 4 bis 12 C-Atomen enthalten, wie z.B. Phthalsäure, Isophthalsäure, Naphthalin-2,6-dicarbonsäure, 4,4'-Diphenyldicarbonsäure, Bernsteinsäure, Adipinsäure, und Cyclohexandicarbonsäure. Bevorzugt werden nur Terephthalsäure und Isophthalsäure eingesetzt.

Als Diol wird 1,4- Butandiol eingesetzt.

Die Polybutylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Die verwendeten Polybutylenterephthalate besitzen eine Fließfähigkeit gemessen als melt mass flow rate (MFR) von 5g/10 min bis 30g/10 min, bevorzugt von 7 g/10 min bis 20 g/10 min, besonders bevorzugt von 9 g/10 min bis 15 g/10 min, jeweils bestimmt bei 250°C Messtemperatur und einer Belastung von 2.16 kg. Die Messung erfolgt gemäß DIN EN ISO 1133 (Version von 2012).

Ein geeignetes Polybutylenterephthalat ist beispielsweise Pocan^{™} B1600 (Lanxess, Deutschland).

Durch die Polybutylenterephthalate mit der Fließfähigkeit wird in den erfindungsgemäßen Zusammensetzungen eine vorteilhafte Balance aus mechanischen und rheologischen Eigenschaften erreicht.

Die Polybutylenterephthalate lassen sich nach bekannten Methoden herstellen (s. z.B. Kunststoff-Handbuch, Band VIII, S. 695 ff., Carl-Hanser-Verlag, München 1973).

### Komponente C

Bei der Komponente C handelt es sich um kautschukmodifizierte Pfropfpolymerisate. Diese Pfropfpolymerisate umfassen
C.1 5 bis 95 Gew.-%, bevorzugt 7 bis 50 Gew.-%, besonders bevorzugt 8 bis 20 Gew.-%, bezogen auf Komponente C, wenigstens eines Vinylmonomeren auf
C.2 95 bis 5 Gew.-%, bevorzugt 93 bis 50 Gew.-%, besonders bevorzugt 92 bis 80 Gew.-%, bezogen auf Komponente C, einer oder mehrerer kautschukartiger Pfropfgrundlagen bestehend aus Silikon-Acrylat-Kompositkautschuk.

Aus den Vinylmonomeren werden Polymerketten gebildet und diese chemisch an die Pfropfgrundlage C.2 gebunden.

Die Pfropfgrundlagen haben Glasübergangstemperaturen < 10°C, bevorzugt < 0°C, besonders bevorzugt < -20°C.

Die Glasübergangstemperatur wird mittels dynamischer Differenzkalorimetrie (DSC) gemäß der Norm DIN EN 61006 bei einer Heizrate von 10 K/min mit Definition der T_{g} als Mittelpunkttemperatur (Tangentenmethode) bestimmt.

Die Pfropfgrundlage C.2 hat im Allgemeinen eine mittlere Teilchengröße (d₅₀-Wert) von 0,05 bis 10 µm, vorzugsweise 0,1 bis 2 µm, besonders bevorzugt 0,1 bis 0,5 µm.

Die mittlere Teilchengröße dso ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Monomere C.1 sind vorzugsweise Gemische aus
C.1.1 50 bis 99, bevorzugt 60 bis 80, insbesondere 70 bis 80 Gew.-Teile, bezogen auf C.1, Vinylaromaten und/oder kernsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
C.1.2 1 bis 50, bevorzugt 20 bis 40, insbesondere 20 bis 30 Gew.-Teilen, bezogen auf C.1, Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere C.1.1 sind ausgewählt aus mindestens einem der Monomere Styrol, α-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C1.2 Acrylnitril oder C.1.1 = C.1.2 Methylmethacrylat. Am meisten bevorzugt ist Methylmethacrylat.

Die Pfropfcopolymerisate C werden durch radikalische Polymerisation, z.B. durch Emulsions-, Suspensions-, Lösungs- oder Massepolymerisation, vorzugsweise durch Emulsions-oder Massepolymerisation, insbesondere durch Emulsionspolymerisation hergestellt.

Der Gelanteil der Pfropfgrundlage C.2 beträgt mindestens 30 Gew.-%, vorzugsweise mindestens 40 Gew.-%, insbesondere mindestens 60 Gew.-%, jeweils bezogen auf C.2 und gemessen als unlöslicher Anteil in Toluol.

Der Gelgehalt der Pfropfgrundlage C.2 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Als Pfropfgrundlage C.2 wird ein Silikon-Acrylat-Kompositkautschuk oder eine Mischung verschiedener Silikon-Acrylat-Kompositkautschuk eingesetzt. Diese Silikon-Acrylat-Kompositkautschuke sind Komposit-Kautschuke mit pfropfaktiven Stellen enthaltend 20 bis 60 Gew.-%, besonders bevorzugt 25 bis 50 Gew.-% Silikonkautschuk-Anteil C.2.1 und 85 bis 40 Gew.-%, besonders bevorzugt 75 bis 50 Gew.-% Polyalkyl(meth)acrylatkautschuk-Anteil C.2.2, wobei sich die beiden genannten Kautschuk-Komponenten im Komposit-Kautschuk gegenseitig durchdringen, so dass sie sich nicht wesentlich voneinander trennen lassen.

Bei den besonders bevorzugten Anteilen von Silikonkautschuk und Polyalkyl(meth)acrylatkautschuk ergibt sich eine besonders vorteilhafte Kombination aus guten mechanischen Eigenschaften, guter Oberfläche der Bauteile und guter Beständigkeit gegenüber hydrolytischem Molekulargewichtsabbau und Chemikalieneinfluss.

Silikon-Acrylat-Komposit-Kautschuke sind bekannt und beispielsweise beschrieben in US 5,807,914, EP 430134 und US 4888388.

Geeignete Silikonkautschuk-Komponenten C.2.1 der Silikon-Acrylat-Kompositkautschuke gemäß C.2 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß C.2.1 wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenylcyclotetrasiloxane, Octaphenylcyclotetrasiloxan eingesetzt.

Die Organosiloxan-Monomere können allein oder in Form von Mischungen mit 2 oder mehr Monomeren eingesetzt werden.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Als Pfropfmittel (V) seien beispielhaft genannt: β-Methacryloyloxy-ethyldimethoxymethylsilan, γ-Methacryloyloxy-propylmethoxydimethyl-silan, γ-Methacryloyloxypropyldimethoxymethyl-silan, γ- Methacryloyloxy-propyltrimethoxy-silan, γ-Methacryloyloxy-propylethoxydiethyl-silan, γ-Methacryloyloxy-propyldiethoxymethylsilan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben.

Geeignete Polyalkyl(meth)acrylatkautschuk-Komponenten C.2.2 der Silikon-Acrylat-Kompositkautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis C₈-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-Ci-Cs-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.-%, bezogen auf das gesamte Gewicht der Polyalkyl(meth)acrylatkautschuk-Komponente des Silikonacrylat-Kautschuks.

Der Silikonacrylat-Kompositkautschuk wird hergestellt, indem zunächst der Silikonkautschuk gemäß C.2.1 als wässriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt.

Zur Herstellung der genannten Silikon-Acrylat-Komposit-Pfropfkautschuke werden die Monomere C.1 auf die Kautschuk-Grundlage C.2 aufgepfropft.

Dabei können die beispielsweise in EP 249964, EP 430134 und US 4888388 beschriebenen Polymerisationsmethoden angewendet werden.

Die als Komponente C genannten Silikon-Acrylat-Komposit-Pfropfkautschuke sind kommerziell erhältlich. Beispielhaft sei genannt Metablen^{®} S-2030 der Mitsubishi Rayon Co. Ltd.

### Komponente D

Als Komponente D wird ein Phosphazen oder eine Mischung verschiedener Phosphazene eingesetzt. Phosphazene sind Verbindungen der Formeln (IV) und (V) 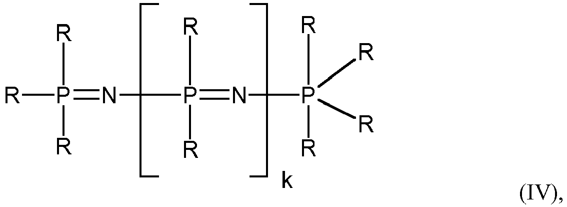 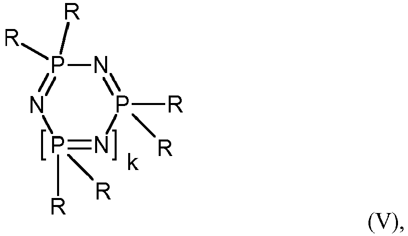 wobei
- R: jeweils gleich oder verschieden ist und für - einen Aminrest, - jeweils, gegebenenfalls halogeniertes, vorzugsweise mit Fluor halogeniertes, weiter bevorzugt monohalogeniertes, C₁- bis C₈-Alkyl, vorzugsweise Methyl, Ethyl, Propyl oder Butyl, - C₁- bis C₈- Alkoxy, vorzugsweise Methoxy, Ethoxy, Propoxy oder Butoxy, - jeweils gegebenenfalls durch Alkyl, vorzugsweise C₁-C₄-Alkyl, und/oder Halogen, vorzugsweise Chlor und/oder Brom, substituiertes C₅- bis C₆-Cycloalkyl, - jeweils gegebenenfalls durch Alkyl, vorzugsweise C₁-C₄-Alkyl, und/oder Halogen, vorzugsweise Chlor, Brom und/oder Hydroxy-substituiertes, C₆-bis C₂₀-Aryloxy, vorzugsweise Phenoxy, Naphthyloxy, - jeweils gegebenenfalls durch Alkyl, vorzugsweise C₁-C₄-Alkyl, und/oder Halogen, vorzugsweise Chlor und/oder Brom, substituiertes C₇- bis C₁₂-Aralkyl, vorzugsweise Phenyl-C₁-C₄-alkyl, oder - einen Halogen-Rest, vorzugsweise Chlor oder Fluor, oder - einen OH-Rest steht.
- k: für 0 oder eine Zahl von 1 bis 15, vorzugsweise für eine Zahl von 1 bis 10 steht.

Für den Fall, dass das Phosphazen gemäß Formel (15a) oder (15b) am Phosphor Halogensubstituiert ist, z. B. aus unvollständig reagierten Ausgangsmaterial, ist der Anteil dieses am Phosphor Halogen-substituierten Phosphazens bevorzugt kleiner als 1000 ppm, weiter bevorzugt kleiner 500ppm.

In einer weiter bevorzugten Ausführungsform werden nur Phosphazene mit gleichem R eingesetzt.

Bevorzugt sind cyclische Phosphazene gemäß Formel (V), weiter bevorzugt sind Propoxyphosphazen, Phenoxyphosphazen, Methylphenoxyphosphazen, Aminophosphazen und Fluoralkylphosphazene, sowie Phosphazene der folgenden Strukturen:

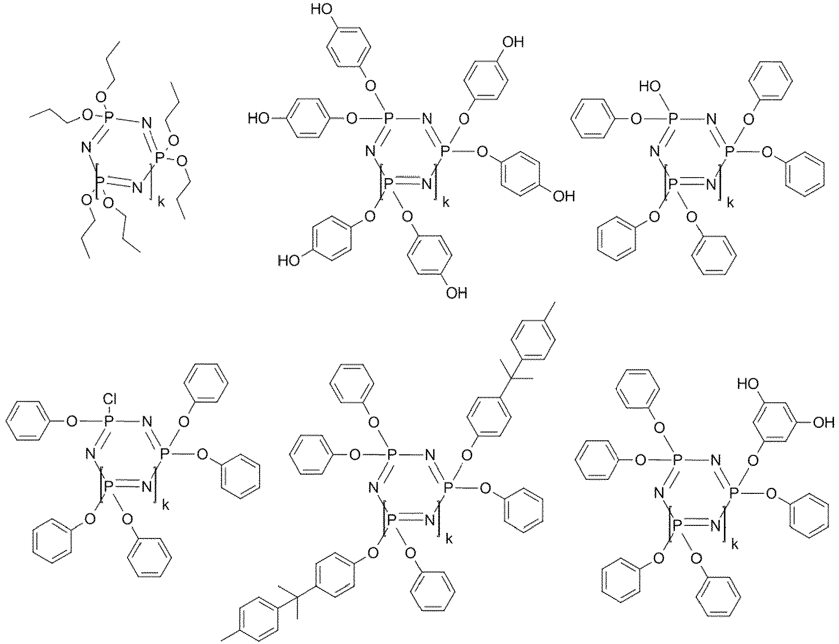

In den oben gezeigten Verbindungen ist k = 1, 2 oder 3.

Ganz besonders bevorzugt ist cyclisches Phenoxyphosphazen (alle R = Phenoxy) mit einem Anteil an Oligomeren mit k = 1 (C1) von 60 bis 98 mol.-%, weiter bevorzugt von 65 bis 85 mol.-%, gemäß Formel (VI).

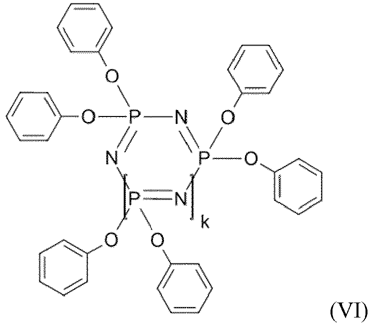

Bevorzugt ist die Komponente C ein Phenoxyphosphazen mit einem Trimerenanteil (k=1) von 65 bis 85 mol.-%, einem Tetramerenanteil (k=2) von 10 bis 20 mol.-%, einem Anteil an höheren oligomeren Phosphazene (k=3,4,5,6 und 7) von 5 bis 20 mol.-% und Phosphazen-Oligomere mit k>= 8 von 0 bis 2 mol.-%, bezogen auf die Komponente C.

Die Phosphazene und deren Herstellung sind beispielsweise in EP-A 728 811, DE-A 1 961668 und WO 97/40092 beschrieben.

Ein geeignetes Phosphazen ist beispielsweise Rabitle^{™} FP 110 (Fushimi, Japan).

Die Oligomer-Zusammensetzungen der Phosphazene in den jeweiligen Blendproben lassen sich auch nach Compoundieren mittels ³¹P NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

### Komponente E

Als Komponente E kann die erfindungsgemäße Formmasse ein oder mehrere Polymeradditive enthalten, bevorzugt ausgewählt aus der Gruppe bestehend aus Antidrippingmitteln, Flammschutzsynergisten, Rauchinhibitoren, Gleit- und Entformungsmitteln, Nukleiermitteln, Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, weiteren von Komponenten A, B und C verschiedenen polymeren Bestandteilen (beispielsweise funktionelle Blendpartnern), Füll- und Verstärkungsstoffen sowie Farbstoffen und Pigmenten.

In bevorzugter Ausführungsform enthält die Formmasse keine Füll- und Verstärkungsstoffe.

In bevorzugter Ausführungsform enthält die Formmasse mindestens ein Polymeradditiv ausgewählt aus der Gruppe bestehend aus Gleit- und Entformungsmitteln, Stabilisatoren, Antidrippingmitteln, Fließfähigkeitspromotoren, Phasenverträglichkeits-vermittlern, weiteren polymeren Bestandteilen, Farbstoffen und Pigmenten.

In bevorzugter Ausführungsform enthält die Formmasse als Entformungsmittel Pentaerythrittetrastearat.

In bevorzugter Ausführungsform enthält die Formmasse als Stabilisator mindestens einen Vertreter ausgewählt aus der Gruppe bestehend aus sterisch gehinderten Phenolen, Phosphorsäuren, organischen Phosphiten und Schwefel-basierten Co-Stabilisatoren.

In besonders bevorzugter Ausführungsform enthält die Formmasse als Komponente E mindestens einen Vertreter ausgewählt aus der Gruppe bestehend aus Gleit- und Entformungsmitteln, Stabilisatoren sowie Farbstoffen und Pigmenten und ist frei von weiteren Polymeradditiven gemäß Komponente E.

### Herstellung der Formmassen und Formkörper

Die thermoplastischen Formmassen können beispielsweise hergestellt werden, indem man die jeweiligen Bestandteile in bekannter Weise vermischt und bei Temperaturen von bevorzugt 200°C bis 320°C, besonders bevorzugt bei 220°C bis 290°C, ganz besonders bevorzugt bei 230°C bis 270°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die jeweiligen Komponenten schmelzcompoundiert und schmelzextrudiert werden.

Die Vermischung der einzelnen Bestandteile der Formmasse kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Spritzguss-, Extrusions-, Blasform- und Tiefziehverfahren. Am meisten bevorzugt ist das Spritzgussverfahren.

Es ist auch möglich, die Bestandteile der Formmasse direkt in eine Spritzgussmaschine oder in ein Extrusionsaggregat zu dosieren und zu Formkörper zu verarbeiten.

Beispiele für solche Formkörper, die aus der erfindungsgemäßen Formmasse hergestellt werden können, sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte. Die erfindungsgemäßen Formmassen eignen sich besonders zur Herstellung von Gehäusen und Verkleidungen von medizinischen Geräten.

### Beispiele

### Komponente A:

Lineares Polycarbonat auf Basis Bisphenol-A mit einem gewichtsgemittelten Molekulargewicht Mw von 31000 g/mol (bestimmt durch GPC in Methylenchlorid mit Polycarbonat auf Basis von Bisphenol A als Standard).

### Komponente B-1

Polybutylenterephthalat mit einer Schmelzfließrate (MFR) von 12,0 g / 10min, gemessen gemäß DIN EN ISO 1133 (Version von 2012) bei 250°C und 2,16 kg Belastung.

### Komponente B-2

Polybutylenterephthalat mit einer Schmelzfließrate (MFR) von 49,0 g / 10min, gemessen gemäß DIN EN ISO 1133 (Version von 2012) bei 250°C und 2,16 kg Belastung.

### Komponente B-3

Polyethylenterephthalat (PET) mit einer intrinsischen Viskosität von 0,87 dl/g, gemessen in Dichloressigsäure in einer Konzentration von 1 Gew.-% bei 25°C.

### Komponente C-1

Pfropfpolymerisat aus 14 Gew.-% Methylmethacrylat auf 86 Gew.-% eines Silikonacrylat-Komposit-Kautschukes als Pfropfgrundlage, wobei der Silikonacrylat-Komposit-Kautschuk 36 Gew.-% Silikonkautschuk und 64 Gew.-% Polyalkyl(meth)acrylatkautschuk enthält, und wobei sich die beiden genannten Kautschuk-Komponenten im Komposit-Kautschuk gegenseitig durchdringen, so dass sie sich nicht wesentlich voneinander trennen lassen.

### Komponente C-2

Pfropfpolymerisat hergestellt durch Reaktion von 11 Gew.-% Methylmethacrylat auf 89 Gew.-% eines Silikonacrylat-Komposit-Kautschukes als Pfropfgrundlage, wobei der Silikonacrylat-Komposit-Kautschuk 92 Gew.-% Silikonkautschuk und 8 Gew.-% Polyalkyl(meth)acrylatkautschuk enthält, und wobei sich die beiden genannten Kautschuk-Komponenten im Komposit-Kautschuk gegenseitig durchdringen, so dass sie sich nicht wesentlich voneinander trennen lassen.

### Komponente C-3

Pfropfpolymerisat aus 17 Gew.-% Methylmethacrylat auf 83 Gew.-% eines Silikonacrylat-Komposit-Kautschukes als Pfropfgrundlage, wobei der Silikonacrylat-Komposit-Kautschuk 11 Gew.-% Silikonkautschuk und 89 Gew.-% Polyalkyl(meth)acrylatkautschuk enthält, und wobei sich die beiden genannten Kautschuk-Komponenten im Komposit-Kautschuk gegenseitig durchdringen, so dass sie sich nicht wesentlich voneinander trennen lassen.

### Komponente C-4

Pfropfpolymerisat aus 23 Gew.-% Methylmethacrylat und 6 Gew.-% Styrol auf 71 Gew.-% Butadienkautschuk als Pfropfgrundlage.

### Komponente D:

Phenoxyphosphazen der Formel (VI) mit einem Anteil an Oligomeren mit k = 1 von 70 mol.-%, einem Anteil an Oligomeren mit k = 2 von 18 mol.-% und einem Anteil an Oligomeren mit k > 3 von 12 mol.-%.

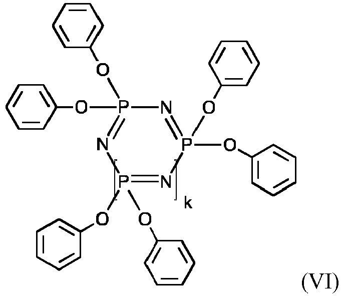

### Komponente E-1:

Cycolac^{™} INP449: Polytetrafluoroethylen (PTFE) Präparat der Firma Sabic bestehend aus 50 Gew.-% PTFE enthalten in einer SAN-Copolymermatrix.

### Komponente E-2:

Irganox^{™} 1010 (Pentaerythritol tetrakis(3,5-di-tert-butyl-4-hydroxyhydrocinnamat); BASF (Ludwigshafen, Deutschland)

### Komponente E-3:

Irgafos^{™} 168 (Tris(2,4-di-tert-butyl-phenyl)-phosphit); BASF (Ludwigshafen, Deutschland)

### Komponente E-4:

Phosphorige Säure, H₃PO₃, Sigma-Aldrich Chemie GmbH, Deutschland

### Komponente E-5:

Pentaerythrittetrastearat als Entformungsmittel, Cognis Oleochemicals GmbH, Deutschland

### Herstellung und Prüfung der erfindungsgemäßen Formmassen

Das Mischen der Komponenten erfolgte auf einem Zweiwellenextruder ZSK-25 der Fa. Werner & Pfleiderer bei einer Massetemperatur von 260 °C - 280 °C. Die Formkörper wurden bei einer Massetemperatur von 260 °C (bzw. bei - 270 °C bei V22 wegen der höheren Schmelztemperatur von PET) und einer Werkzeugtemperatur von 70°C auf einer Spritzgießmaschine Typ Arburg 270 E hergestellt.

Das Zug E-Modul wurde gemäß ISO 527 (Version von 1996) bei Raumtemperatur bestimmt.

Die IZOD-Kerbschlagzähigkeit wurde bestimmt bei Raumtemperatur an Prüfstäben der Dimension von 80 mm x 10 mm x 4 mm gemäß ISO 180-A (Version von 1982).

Die Schlagzähigkeit wurde bestimmt bei Raumtemperatur an Prüfstäben der Dimension von 80 mm x 10 mm x 4 mm gemäß ISO 180-U (Version von 1982).

Die Schmelzeviskosität als Maß für die Schmelzefließfähigkeit wurde gemäß ISO 11443 (Version von 2014) bei einer Temperatur von 260°C und einer Scherrate von 1000 s⁻¹ ermittelt. Bei V22 erfolgte die Messung wegen der höheren Schmelztemperatur von PET bei 270°C.

Die Schmelze-Volumen-Fließrate (MVR) wurde gemessen nach ISO 1133 (Version von 2012) bei einer Temperatur von 260 °C (bzw. bei 270 °C bei V22) und einer Belastung von 5 kg.

Die Flammwidrigkeit wurde gemäß UL94V an Stäben der Abmessung 127 x 12,7 x 2,4 mm beurteilt.

Als Maß für die Chemikalienbeständigkeit diente die Spannungsriss-(ESC)-Beständigkeit in verschiedenen Medien bei Raumtemperatur. Bestimmt wurde die Zeit bis zum spannungsrissinduzierten Versagen durch das Auftreten von Kantenrissen oder vollständigem Bruch eines bei 260°C (bzw. 270°C bei V22) Massetemperatur abgespritzten Prüfkörpers der Abmessung 80 mm x 10 mm x 4 mm, der mittels einer Spannschablone mit einer externen Randfaserdehnung (Rf) von 1,2 oder 2,4% beaufschlagt und im Medium vollständig eingetaucht wurde. Die Messung erfolgte in Anlehnung an ISO 22088 (Version von 2006). Als Medien wurden Rapsöl sowie die Reinigungsmittel Cidex^{™} OPA (Johnson & Johnson Medical Ltd., UK) und Hexaquart^{™} plus (BBraun, Deutschland) eingesetzt. Die maximale Prüfdauer beträgt 168 h. Falls in diesem Zeitraum keine Kantenrisse oder der Bruch des Prüfkörpers beobachtet werden, gilt die Prüfung als bestanden (beständig).

Bei Cidex^{™} OPA handelt es sich um ein Reinigungs- und Desinfektionsmittel, welches insbesondere für die Reinigung medizinischer Geräte und Instrumente eingesetzt wird.

Aktiver Wirkstoff von Cidex^{™} OPA ist ortho-Phthalaldehyd in einer Konzentration von 0,55 %.

Bei Hexaquart^{™} plus handelt es sich um ein Konzentrat zur Reinigung und Desinfektion von Flächen im medizinischen Bereich. Aktive Wirkstoffe des Reinigungsmittels sind Didecyldimethylammoniumchlorid (6,0 g auf 100 g) und N-(3-aminopropyl)-N-Dodecylpropan-1,3-Diamin (5,5 g auf 100 g). Es wurde aus dem Konzentrat eine Lösung mit herstellerseitig empfohlener Konzentration von 2 Vol.-% in Wasser hergestellt und als Testmedium verwendet.

**Tabelle 1:**

| Zusammensetzungen der erfindungsgemäßen Formmassen und ihre Eigenschaften | | | | | | |
|---|---|---|---|---|---|---|
| **Komponenten [Gew.-%]** | **1** | **2** | **3** | **4** | **5** | **6** |
| A | 52,90 | 50,95 | 60,90 | 52,90 | 54,20 | 49,65 |
| B-1 | 28,48 | 27,43 | 20,48 | 28,48 | 29,18 | 26,73 |
| C-1 | 5,00 | 8,00 | 5,00 | 5,00 | 5,00 | 8,00 |
| D | 12,00 | 12,00 | 12,00 | 12,00 | 10,00 | 14,00 |
| E-1 | 0,80 | 0,80 | 0,80 | 0,80 | 0,80 | 0,80 |
| E-2 | 0,10 | 0,10 | 0,10 | 0,10 | 0,10 | 0,10 |
| E-3 | 0,10 | 0,10 | 0,10 | 0,10 | 0,10 | 0,10 |
| E-4 | 0,02 | 0,02 | 0,02 | 0,02 | 0,02 | 0,02 |
| E-5 | 0,60 | 0,60 | 0,60 | 0,60 | 0,60 | 0,60 |
| Verhältnis D/C | 2,4 | 1,5 | 2,4 | 2,4 | 2,0 | 1,75 |

| **Eigenschaften** | | | | | | |
|---|---|---|---|---|---|---|
| MVR [cm³/10min] | 32 | 28 | 31 | 31 | 28 | 34 |
| Schmelzeviskosität [Pas] | 256 | 253 | 273 | 255 | 280 | 227 |
| Zug-E-Modul [MPa] | 2337 | 2171 | 2360 | 2337 | 2338 | 2172 |
| Izod-Schlagzähigkeit [kJ/m²] | n. b. | n. b. | n. b. | n. b. | n. b. | n. b. |
| Izod-Kerbschlagzähigkeit [kJ/m²] | 46 | 61 | 52 | 49 | 51 | 58 |
| | | | | | | |
| UL94-V (2.4 mm) | V-0 | V-0 | V-0 | V-0 | V-0 | V-0 |
| ESC- Beständigkeit | | | | | | |
| Rapsöl, 2,4% Rf | beständig | | | | | |
| Cidex^{™} OPA, 2,4% Rf | beständig | | | | | |
| Hexaquart^{™} plus, 1,2% Rf | beständig | | | | | |

| | | | | | | |
|---|---|---|---|---|---|---|
| ^{∗}n.b.: kein Bruch | | | | | | |

**Tabelle 2:**

| Zusammensetzungen der nicht erfindungsgemäßen Formmassen und ihre Eigenschaften | | | | | | |
|---|---|---|---|---|---|---|
| **Komponenten [Gew.-%]** | **V7** | **V8** | **V9** | **V10** | **V11** | **V12** |
| A | 52,90 | 50,95 | 52,90 | 50,95 | 52,90 | 50,95 |
| B-1 | 28,48 | 27,43 | 28,48 | 27,43 | 28,48 | 27,43 |
| C-2 | 5,00 | 8,00 | | | | |
| C-3 | | | 5,00 | 8,00 | | |
| C-4 | | | | | 5,00 | 8,00 |
| D | 12,00 | 12,00 | 12,00 | 12,00 | 12,00 | 12,00 |
| E-1 | 0,80 | 0,80 | 0,80 | 0,80 | 0,80 | 0,80 |
| E-2 | 0,10 | 0,10 | 0,10 | 0,10 | 0,10 | 0,10 |
| E-3 | 0,10 | 0,10 | 0,10 | 0,10 | 0,10 | 0,10 |
| E-4 | 0,02 | 0,02 | 0,02 | 0,02 | 0,02 | 0,02 |
| E-5 | 0,60 | 0,60 | 0,60 | 0,60 | 0,60 | 0,60 |
| Verhältnis D/C | 2,4 | 1,5 | 2,4 | 2,4 | 2,4 | 1,5 |

| **Eigenschaften** | | | | | | |
|---|---|---|---|---|---|---|
| MVR [cm³/10min] | 29 | 25 | 28 | 26 | 28 | 25 |
| Schmelzeviskosität [Pas] | 253 | 250 | 269 | 261 | 277 | 272 |
| Zug-E-Modul [MPa] | 2411 | 2263 | 2420 | 2249 | 2352 | 2226 |
| Izod-Schlagzähigkeit [kJ/m²] | n. b. | n. b. | n. b. | n. b. | n. b. | n. b. |
| Izod-Kerbschlagzähigkeit [kJ/m²] | 13 | 58 | 31 | 63 | 11 | 36 |
| | | | | | | |
| UL94-V (2.4 mm) | V-NOT | V-1 | V-NOT | V-NOT | V-NOT | V-NOT |

| | | | | | | |
|---|---|---|---|---|---|---|
| n.b.: kein Bruch V-NOT: keine UL Klassifizierung, nicht bestanden | | | | | | |

**Tabelle 3**

| Zusammensetzungen der nicht erfindungsgemäßen Formmassen und ihre Eigenschaften | | | | | | | |
|---|---|---|---|---|---|---|---|
| **Komponenten [Gew.-%]** | **V13** | **V14** | **V15** | **V16** | **V17** | **V18** | **V19** |
| A | 49,00 | 52,25 | 51,60 | 56,77 | 48,90 | 40,90 | 65,025 |
| B-1 | 26,38 | 28,13 | 27,78 | 30,57 | 32,48 | 40,48 | 16,260 |
| C-1 | 11,00 | 8,00 | 5,00 | 5,00 | 5,00 | 5,00 | 5,00 |
| D | 12,00 | 10,00 | 14,00 | 6,00 | 12,00 | 12,00 | 12,00 |
| E-1 | 0,80 | 0,80 | 0,80 | 0,80 | 0,80 | 0,80 | 0,80 |
| E-2 | 0,10 | 0,10 | 0,10 | 0,15 | 0,10 | 0,10 | 0,20 |
| E-3 | 0,10 | 0,10 | 0,10 | 0,10 | 0,10 | 0,10 | 0,10 |
| E-4 | 0,02 | 0,02 | 0,02 | 0,01 | 0,02 | 0,02 | 0,015 |
| E-5 | 0,60 | 0,60 | 0,60 | 0,60 | 0,60 | 0,60 | 0,60 |
| Verhältnis D/C | 1,09 | 1,25 | 2,8 | 1,2 | 2,4 | 2,4 | 2,4 |
| **Eigenschaften** | | | | | | | |
| MVR [cm³/10min] | 25 | 24 | 37 | 22 | 34 | 33 | 31 |
| Schmelzeviskosität [Pas] | 248 | 277 | 227 | 338 | 238 | 239 | 291 |
| Zug-E-Modul [MPa] | 2045 | 2199 | 2323 | 2377 | 2362 | 2347 | 2278 |
| Izod-Schlagzähigkeit [kJ/m²] | n. b. | n. b. | n. b. | n. b. | n. b. | n. b. | n. b. |
| Izod-Kerbschlagzähigkeit [kJ/m²] | 60 | 62 | 17 | 58 | 14 | 12 | 68 |
| | | | | | | | |
| UL94-V (2.4 mm) | V-1 | V-NOT | V-1 | V-1 | V-0 | V-0 | V-0 |
| ESC-Beständigkeit | | | | | | | |
| Rapsöl, 2,4% Rf | | | | | | | Beständig |
| Cidex^{™} OPA, 2,4% Rf | | | | | | | Beständig |
| Hexaquart^{™} plus, 1,2% Rf | | | | | | | Kantenrisse nach 118,5 h |

| | | | | | | | |
|---|---|---|---|---|---|---|---|
| n.b.: kein Bruch V-NOT: keine UL Klassifizierung, nicht bestanden | | | | | | | |

**Tabelle 4**

| Zusammensetzungen der nicht erfindungsgemäßen Formmassen und ihre Eigenschaften | | | |
|---|---|---|---|
| **Komponenten [Gew.-%]** | **V20** | **V21** | **V22** |
| A | 52,90 | 52,90 | 52,81 |
| B-1 | 18,98 | | |
| B-2 | 9,50 | 28,48 | |
| B-3 | | | 28,48 |
| C-1 | 5,00 | 5,00 | 5,00 |
| D | 12,00 | 12,00 | 12,00 |
| E-1 | 0,80 | 0,80 | 0,80 |
| E-2 | 0,10 | 0,10 | 0,20 |
| E-3 | 0,10 | 0,10 | 0,10 |
| E-4 | 0,02 | 0,02 | 0,02 |
| E-5 | 0,60 | 0,60 | 0,60 |
| Verhältnis D/C | 2,4 | 2,4 | 2,4 |
| **Eigenschaften** | | | |
| MVR [cm³/10min] | 41 | 48 | 48 (270°C) |
| Schmelzeviskosität [Pas] | 224 | 200 | 132 (270°C) |
| Zug-E-Modul [MPa] | 2335 | 2354 | 2383 |
| Izod-Schlagzähigkeit [kJ/m²] | n. b. | n. b. | n. b. |
| Izod-Kerbschlagzähigkeit [kJ/m²] | 13 | 15 | 24 |
| | | | |
| UL94-V (2.4 mm) | V-0 | V-0 | V-0 |
| ESC-Beständigkeit | | | |
| Rapsöl, 2,4% Rf | | | Beständig |
| Cidex^{™} OPA, 2,4% Rf | | | Beständig |
| Hexaquart^{™} plus, 1,2% Rf | | | Bruch bei <168 h |

| | | | |
|---|---|---|---|
| n.b.: kein Bruch | | | |

Die Daten aus den Tabellen 1 bis 4 zeigen, dass nur die erfindungsgemäßen Formmassen das gewünschte Eigenschaftsprofil aus mechanischen Eigenschaften, insbesondere Schlagzähigkeit und Kerbschlagzähigkeit, Fließfähigkeit und Flammwidrigkeit aufweisen. Die Formmassen 1, 3, 4 und 5 zeigen zudem die bevorzugt gewünschte Steifigkeit.

Wird ein nicht erfindungsgemäßes Pfropfpolymerisat eingesetzt (V7 bis V12), so sind die Flammwidrigkeit und zum Teil auch die Zähigkeit nicht auf dem erforderlichen Niveau.

Ist das Gewichtsverhältnis der Komponenten D zu C nicht im beanspruchten Bereich (V13 bis V16), so ist die Flammwidrigkeit ebenfalls nicht ausreichend. Außerdem ist bei einem zu hohem Verhältnis die Zähigkeit eingeschränkt.

Ist der Anteil der Komponente B zu hoch, zu ist die Zähigkeit deutlich eingeschränkt (V17 und V18). Ist der Anteil dagegen zu niedrig, ist so ist die Beständigkeit gegenüber Reinigungsmitteln eingeschränkt, also nicht gegenüber allen Reinigungsmitteln gegeben.

Weiterhin ist es nachteilig, wenn die Komponente B eine zu hohe Fließfähigkeit aufweist (V20 und V21) oder wenn anstatt Polybutylenterephthalat ein Polyethylenterephthalat eingesetzt wird (V22).

## Patentansprüche

1. Thermoplastische Formmasse enthaltend
A) 45 bis 65 Gew.-% mindestens eines aromatisches Polycarbonats, Polyestercarbonats oder Mischungen daraus,
B) 18 bis 31 Gew.-% Gew.-% mindestens eines Polybutylenterephthalats mit einer Fließfähigkeit von 5g/10 min bis 30g/10 min bestimmt gemäß DIN EN ISO 1133 bei 250°C Messtemperatur und einer Belastung von 2.16 kg,
C) 3 bis 10 Gew.-% mindestens eines kautschukmodifizierten Pfropfpolymerisats mit einer Pfropfgrundlage aus einem Silikon-Acrylat-Kompositkautschuk und einem Silikonkautschukgehalt von 20 bis 60 Gew.-% bezogen auf die Pfropfgrundlage
D) 8 bis 13 Gew.-% mindestens eines Phosphazens,
E) 0 bis 8,0 Gew.-% mindestens eines Polymeradditivs,
wobei das Gewichtsverhältnis der Komponenten D) zu C) im Bereich von 1,3:1 bis 2,5:1 liegt.

2. Formmasse gemäß Anspruch 1, **dadurch gekennzeichnet, dass** Komponente A ein lineares Polycarbonat auf Basis von Bisphenol A ist.

3. Formmasse gemäß Anspruch 1 oder 2, **dadurch gekennzeichnet, dass** die Komponente A ein gewichtsgemitteltes Molekulargewicht M_{w} bestimmt durch Gelpermeationschromatographie in Methlylenchlorid mit Polycarbonat auf Basis von Bisphenol A als Standard von 28000 bis 33000 g/mol aufweist.

4. Formmasse gemäß Anspruch einem der vorhergehenden Ansprüche, **dadurch gekennzeichnet, dass** Komponente B eine Fließfähigkeit gemessen als MFR von 9g/10 min bis 15g/10 min bei 250°C Messtemperatur und einer Belastung von 2.16 kg gemäß DIN EN ISO 1133 aufweist.

5. Formmasse gemäß einem der vorhergehenden Ansprüche, **dadurch gekennzeichnet, dass** es sich bei der Komponente C um ein Pfropfpolymerisat handelt umfassend
C.1 8 bis 20 Gew.-%, bezogen auf Komponente C, wenigstens eines Vinylmonomeren auf
C.2 92 bis 80 Gew.-%, bezogen auf Komponente C, einer oder mehrerer kautschukartiger Pfropfgrundlagen bestehend aus Silikon-Acrylat-Kompositkautschuk.

6. Formmasse gemäß Anspruch 5, **dadurch gekennzeichnet, dass** C.1 Methylmethacrylat ist.

7. Formmasse gemäß einem der vorhergehenden Ansprüche, **dadurch gekennzeichnet, dass** die Pfropfgrundlage der Komponente C einen Silkonkautschukgehalt von 25 bis 50 Gew.-%, bezogen auf die Pfropfgrundlage, aufweist.

8. Formmasse gemäß einem der vorhergehenden Ansprüche, **dadurch gekennzeichnet, dass** die Komponente D ein cyclisches Phenoxyphosphazen gemäß Formel (V) ist 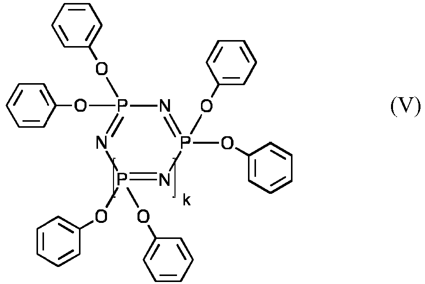 wobei k eine ganze Zahl von 1 bis 10 ist.

9. Formmasse gemäß Anspruch 8, wobei der Trimerenanteil (k=1) 60 bis 100 mol-%, bezogen auf die Komponente D beträgt.

10. Formmasse gemäß einem der vorhergehenden Ansprüche, **dadurch gekennzeichnet, dass** das Gewichtsverhältnis der Komponente D zu der Komponente C 2:1 bis 2,5:1 beträgt.

11. Formmasse gemäß einem der vorhergehenden Ansprüche, enthaltend
50 bis 62 Gew.-% der Komponente A,
20 bis 30 Gew.-% der Komponente B,
4 bis 9 Gew.-% der Komponente C,
9 bis 12 Gew.-% der Komponente D und
0,2 bis 3 Gew.-% der Komponente E.

12. Formmasse gemäß einem der vorhergehenden Ansprüche bestehend aus den Komponenten A bis E.

13. Verfahren zur Herstellung einer Formmasse gemäß einem der Ansprüche 1 bis 12, **dadurch gekennzeichnet, dass** die Komponenten A bis E bei einer Temperatur von 200 bis 320 °C miteinander vermischt und anschließend abgekühlt und granuliert werden.

14. Verwendung einer Formmasse nach einem der Ansprüche 1 bis 12 zur Herstellung von Formkörpern.

15. Formkörper, enthaltend eine Formmasse nach einem der Ansprüche 1 bis 12.

## Claims

1. Thermoplastic molding compound comprising
A) 45% to 65% by weight of at least one aromatic polycarbonate, polyestercarbonate or mixtures thereof,
B) 18% by weight to 31% by weight of at least one polybutylene terephthalate having a flowability of 5 g/10 min to 30 g/10 min to DIN EN ISO 1133 at measurement temperature 250°C and a load of 2.16 kg,
C) 3% to 10% by weight of at least one rubber-modified graft polymer having a graft base composed of a silicone-acrylate composite rubber and a silicone rubber content of 20% to 60% by weight based on the graft base,
D) 8% to 13% by weight of at least one phosphazene,
E) 0% to 8.0% by weight of at least one polymer additive,
where the weight ratio of components D) to C) is in the range from 1.3:1 to 2.5:1.

2. Molding compound according to Claim 1, **characterized in that** component A is a linear polycarbonate based on bisphenol A.

3. Molding compound according to Claim 1 or 2, **characterized in that** component A has a weight-average molecular weight M_{w}, determined by gel permeation chromatography in methylene chloride with polycarbonate based on bisphenol A as standard, of 28 000 to 33 000 g/mol.

4. Molding compound according to any of the preceding claims, **characterized in that** component B has a flowability measured as MFR of 9 g/10 min to 15 g/10 min at measurement temperature 250°C and a load of 2.16 kg to DIN EN ISO 1133.

5. Molding compound according to any of the preceding claims, **characterized in that** component C is a graft polymer comprising
C.1 8% to 20% by weight, based on component C, of at least one vinyl monomer on
C.2 92% to 80% by weight, based on component C, of one or more rubber-like graft bases composed of silicone-acrylate composite rubber.

6. Molding compound according to Claim 5, **characterized in that** C.1 is methyl methacrylate.

7. Molding compound according to any of the preceding claims, **characterized in that** the graft base of component C includes a silicone rubber content of 25% to 50% by weight, based on the graft base.

8. Molding compound according to any of the preceding claims, **characterized in that** component D is a cyclic phenoxyphosphazene of formula (V) 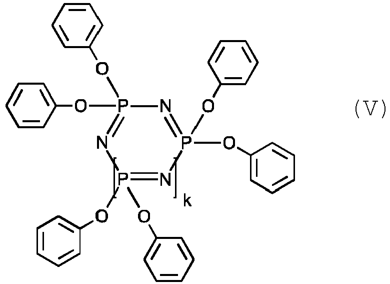 where k is an integer from 1 to 10.

9. Molding compound according to Claim 8, wherein the trimer content (k = 1) is 60 to 100 mol%, based on component D.

10. Molding compound according to any of the preceding claims, **characterized in that** the weight ratio of component D to component C is 2:1 to 2.5:1.

11. Molding compound according to any of the preceding claims, comprising
50% to 62% by weight of component A,
20% to 30% by weight of component B,
4% to 9% by weight of component C,
9% to 12% by weight of component D and
0.2% to 3% by weight of component E.

12. Molding compound according to any of the preceding claims, consisting of components A to E.

13. Process for producing a molding compound according to any of Claims 1 to 12, **characterized in that** components A to E are mixed with one another at a temperature of 200 to 320°C and then cooled and pelletized.

14. Use of a molding compound according to any of Claims 1 to 12 for production of molded articles.

15. Molded article comprising a molding compound according to any of Claims 1 to 12.

## Revendications

1. Masse de moulage thermoplastique, contenant
A) 45 à 65% en poids d'au moins un polycarbonate aromatique, polyestercarbonate ou de leurs mélanges,
B) 18 à 31% en poids d'au moins un poly(téréphtalate de butylène) présentant un indice de fluidité de 5 g/10 min à 30 g/10 min, déterminé selon la norme DIN EN ISO 1133 à une température de mesure de 250°C et sous une charge de 2,16 kg,
C) 3 à 10% en poids d'au moins un polymère greffé modifié par un caoutchouc présentant une base de greffage constituée par un caoutchouc composite de silicone-acrylate et une teneur en caoutchouc de silicone de 20 à 60% en poids par rapport à la base de greffage
D) 8 à 13% en poids d'au moins un phosphazène,
E) 0 à 8,0% en poids d'au moins un additif polymère,
le rapport pondéral des composants D) à C) se situant dans la plage de 1,3:1 à 2,5:1.

2. Masse de moulage selon la revendication 1, **caractérisée en ce que** le composant A est un polycarbonate linéaire à base de bisphénol A.

3. Masse de moulage selon la revendication 1 ou 2, **caractérisée en ce que** le composant A présente un poids moléculaire moyen en poids M_{w}, déterminé par chromatographie par perméation de gel dans du chlorure de méthylène avec un polycarbonate à base de bisphénol A en tant que témoin, de 28.000 à 33.000 g/mole.

4. Masse de moulage selon l'une quelconque des revendications précédentes, **caractérisée en ce que** le composant B présente un indice de fluidité, mesuré en tant que MFR, de 9 g/10 min à 15 g/10 min à une température de mesure de 250°C et sous une charge de 2,16 kg selon la norme DIN EN ISO 1133.

5. Masse de moulage selon l'une quelconque des revendications précédentes, **caractérisée en ce qu'**il s'agit, pour le composant C, d'un polymère greffé comprenant
C.1 8 à 20% en poids, par rapport au composant C, d'au moins un monomère de vinyle sur
C.2 92 à 80% en poids, par rapport au composant C, d'une ou de plusieurs bases de greffage de type caoutchouc constituées par un caoutchouc composite de silicone-acrylate.

6. Masse de moulage selon la revendication 5, **caractérisée** en ce C.1 est du méthacrylate de méthyle.

7. Masse de moulage selon l'une quelconque des revendications précédentes, **caractérisée en ce que** la base de greffage du composant C présente une teneur en caoutchouc de silicone de 25 à 50% en poids, par rapport à la base de greffage.

8. Masse de moulage selon l'une quelconque des revendications précédentes, **caractérisée en ce que** le composant D est un phénoxyphosphazène cyclique selon la formule (V) 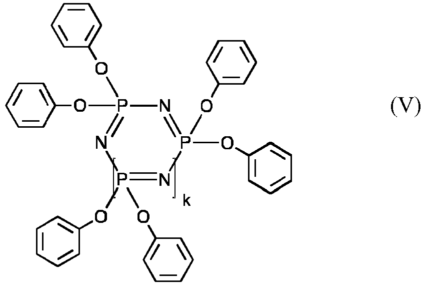 dans laquelle k représente un nombre entier de 1 à 10.

9. Masse de moulage selon la revendication 8, la proportion de trimères (k = 1) étant de 60 à 100% en mole, par rapport au composant D.

10. Masse de moulage selon l'une quelconque des revendications précédentes, **caractérisée en ce que** le rapport pondéral du composant D au composant C est de 2:1 à 2,5:1.

11. Masse de moulage selon l'une quelconque des revendications précédentes, contenant
- 50 à 62% en poids du composant A,
- 20 à 30% en poids du composant B,
- 4 à 9% en poids du composant C,
- 9 à 12% en poids du composant D et
- 0,2 à 3% en poids du composant E.

12. Masse de moulage selon l'une quelconque des revendications précédentes, constituée par les composants A à E.

13. Procédé pour la préparation d'une masse de moulage selon l'une quelconque des revendications 1 à 12, **caractérisé en ce que** les composants A à E sont mélangés les uns avec les autres à une température de 200 à 320°C et ensuite refroidis et granulés.

14. Utilisation d'une masse de moulage selon l'une quelconque des revendications 1 à 12 pour la production de corps façonnés.

15. Corps façonné, contenant une masse de moulage selon l'une quelconque des revendications 1 à 12.
